# EUROPEAN PATENT APPLICATION

(11) **EP 3 706 198 A1**
(43) Date of publication of application: **09.09.2020**
(21) Application number: 19741740.5
(22) Date of filing: 17.01.2019
(51) Int. Cl.: H01M 2/16, H01M 10/0565, H01M 10/052, H01M 10/0583, H01M 10/0585, H01M 2/14

(54) **SEPARATOR FOR LITHIUM SECONDARY BATTERY AND LITHIUM SECONDARY BATTERY COMPRISING SAME**

(30) Priority: 18.01.2018 KR 20180006798; 18.01.2018 KR 20180006799
(71) Applicant: LG CHEM, LTD., Yeongdeungpo-gu, Seoul 07336 (KR)
(72) Inventor: SHIN, Won Kyung, Daejeon 34122 (KR); AHN, Kyoung Ho, Daejeon 34122 (KR); LEE, Chul Haeng, Daejeon 34122 (KR)
(74) Representative: Hoffmann Eitle
(86) International application number: PCT/KR2019/000727
(87) International publication number: WO 2019/143159

(57) **Abstract**

The present invention relates to a separator for a lithium secondary battery including a substrate, a first coating layer including a first organic binder containing an ethylenically unsaturated group, and a second coating layer including a second organic binder and inorganic particles, a method for preparing the same, and a lithium secondary battery including the separator for a lithium secondary battery.

## Description

### TECHNICAL FIELD

### Cross-reference to Related Applications

This application claims the benefit of Korean Patent Application Nos. 10-2018-0006798, filed on January 18, 2018, and 10-2018-0006799, filed on January 18, 2018, in the Korean Intellectual Property Office, the disclosures of which are incorporated herein in its entirety by reference.

### Technical Field

The present invention relates to a separator for a lithium secondary battery and a lithium secondary battery including the same, and more particularly, to a separator for a lithium secondary battery capable of improving the performance and safety of a lithium secondary battery, and a lithium secondary battery including the same.

### BACKGROUND ART

As technology development and demand for mobile devices have increased, the demand for secondary batteries as an energy source has been rapidly increased. Among such secondary batteries, lithium secondary batteries having high energy density and operating potential, long cycle life, and low self-discharging rate have been commercialized and widely used.

Also, in recent years, due to the growing interest in environmental issues, there have been many studies conducted on electric vehicles (EV) and hybrid electric vehicles (HEV) which can replace vehicles that use fossil fuels, such as gasoline vehicles and diesel vehicles, which are one of the main causes of air pollution.

Such electric vehicles (EV), hybrid electric vehicles (HEV), and the like use, as a power source thereof, a nickel metal hydride (Ni-MH) secondary battery, or a lithium secondary battery of high energy density, high discharge voltage and output stability. When the lithium secondary battery is used in an electric vehicle, significantly superior energy density, safety and long-term life properties to those of a conventional small lithium secondary battery are inevitably required in addition to high energy density and properties capable of producing a large output in a short time, since the battery must be used for more than 10 years under harsh conditions.

In general, a lithium secondary battery is manufactured by using a positive electrode, a negative electrode, a separator interposed therebetween, and an electrolyte which is a transfer medium of lithium ions.

Among those, the separator is an inert material that does not participate in an electrochemical reaction. However, the separator provides a path through which lithium ion moves such that a battery is operated, and is a material that separates the physical contact between the anode and the cathode. The separator is one of the key materials that has a significant impact on the performance and stability of the battery.

Methods for preparing a separator are categorized into a wet type and a dry type. The wet-type preparation method is a method in which a polymer material and low molecular weight wax are mixed to extrude a film at a high temperature, and using a solvent, the wax is extracted to form a micro-porous structure. The dry-type preparation method is a method in which, only by physical stretching and heat treatment without using wax, pores are formed in a multi-layered structure in which two or three layers of films are bonded by using polyethylene (PE) and polypropylene (PP).

Meanwhile, the lithium secondary battery may be easily heated due to kinetic energy generated while charging/discharging is repeated, and the separator is vulnerable to such heat. Particularly, a separator using polyethylene (PE) begins to melt at about 130°C °, which may cause a 'shutdown' phenomenon in which pores are closed, and completely melts at 150°C or higher, which may cause meltdown since internal short circuit is not prevented.

In order to overcome such limitations, in recent years, studies have been conducted to enhance durability, such as using a dip coating method in which inorganic particles and a polymer binder are coated together on the surface of a separator.

Meanwhile, in a typical secondary battery, a liquid electrolyte, particularly, an ionic conductive organic liquid electrolyte in which a salt is dissolved in a non-aqueous organic solvent has been mainly used.

However, when a liquid electrolyte is used as described above, there are significant possibilities in that an electrode material is degenerated and an organic solvent is volatilized. In addition, there are safety issues such as combustion due to the temperature rise in a battery itself and the surroundings thereof. In particular, the lithium secondary battery has a problem in that the thickness of a battery is increased, during charging/discharging, due to the generation of gas inside the battery caused by the decomposition of a carbonate organic solvent and/or a side reaction between the organic solvent and an electrode. As a result, the deterioration in the performance and safety of the battery is inevitable.

In general, it is known that the safety of a battery is increased in the order of liquid electrolyte < gel polymer electrolyte < solid polymer electrolyte, whereas the performance of the battery is decreased. A solid polymer electrolyte has been known to have low battery performance, and thus, is not commercially available.

On the other hand, the gel polymer electrolyte is excellent in electrochemical safety, and due to adhesion inherent in the gel, the adhesion between an electrode and the electrolyte is improved so that a thin-film battery may be manufactured. Therefore, the gel polymer electrolyte has been applied to various lithium secondary batteries in recent years. However, when a separator having a coating layer including a gel polymer electrolyte and inorganic particles is used, the adhesion between the coating layer and the electrolyte is low, so that the stability and performance of a secondary battery are deteriorated.

Therefore, it is necessary to develop a separator for a lithium secondary battery, the separator having excellent adhesion to a gel polymer electrolyte while having excellent durability, such that a lithium secondary battery has improved safety while having lifespan properties and capacity properties above a predetermined level.

(Patent Document 1) Korean Patent Laid-Open Publication No. 10-2015-0131513

### DISCLOSURE OF THE INVENTION

### TECHNICAL PROBLEM

An aspect of the present invention provides a separator for a lithium secondary battery, the separator being capable of increasing the adhesion to a gel polymer electrolyte, thereby improving the performance and safety of a battery, being applied to various cell types, and having a coating layer of a multi-layered structure which is easy to prepare.

### TECHNICAL SOLUTION

According to an aspect of the present invention, there is provided a separator for a lithium secondary battery, the separator including a substrate, a first coating layer including a first organic binder containing an ethylenically unsaturated group, and a second coating layer including a second organic binder and inorganic particles.

At this time, the first coating layer may be formed on the surface of the substrate, and the second coating layer may be formed on the first coating layer.

Meanwhile, the second coating layer may be formed on the surface of the substrate, and the first coating layer may be formed on the second coating layer.

According to another aspect of the present invention, there is provided a method for preparing a separator for a lithium secondary battery, the method including forming, on the surface of a substrate, a first coating layer including a first organic binder containing an ethylenically unsaturated group and a second coating layer including a second organic binder and inorganic particles.

According to yet another aspect of the present invention, there is provided a lithium secondary battery including an electrode assembly including at least one unit cell including at least one positive electrode, at least one negative electrode, and at least one first separator interposed between the positive electrode and the negative electrode; and a second separator interposed between the unit cells; and a gel polymer electrolyte formed by polymerizing an oligomer containing a (meth) acrylate group, wherein the first separator and the second separator each include a first coating layer including a first organic binder containing an ethylenically unsaturated group; and a second coating layer including a second organic binder and inorganic particles, and a polymer network in a three-dimensional structure is formed by polymerizing the first organic binder containing an ethylenically unsaturated group and the oligomer containing a (meth) acrylate group.

### ADVANTAGEOUS EFFECTS

A separator according to the present invention includes a first organic binder containing an ethylenically unsaturated group in a first coating layer, such that the ethylenically unsaturated group and an oligomer included in a gel polymer electrolyte composition are reacted to improve the adhesion between the separator and a gel polymer electrolyte, thereby improving the performance and safety of a lithium secondary battery.

Also, when a second coating layer including a second organic binder and inorganic particles is formed on the first coating layer, the separator according to the present invention may prevent an ethylenically unsaturated group from being exposed to high temperatures even when a lithium secondary battery is manufactured through a high-temperature process such as a lamination process. When the second coating layer is formed below the first coating layer, it is possible to manufacture a battery under a variety of conditions, so that the preparation processability of the separator may be improved.

Therefore, the separator may have an improved durability, and may be used as a separator of a lithium secondary battery of various structures, so that the manufacturing processibility of the lithium secondary battery may be improved.

### BEST MODE FOR CARRYING OUT THE INVENTION

Hereinafter, the present invention will be described in more detail.

It will be understood that words or terms used in the specification and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

The terminology used herein is for the purpose of describing particular exemplary embodiments only and is not intended to be limiting of the present invention. The terms of a singular form may include plural forms unless the context clearly indicates otherwise.

It will be further understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

In the present specification, weight average molecular weight may refer to a conversion value for a standard polystyrene measured by Gel Permeation Chromatography (GPC), and unless otherwise specified, molecular weight may refer to the weight average molecular weight. At this time, the weight average molecular weight may be measured by Gel Permeation Chromatography (GPC). For example, a sample specimen of a predetermined concentration is prepared, and a GPC measurement system Alliance 4 device is stabilized. When the device is stabilized, a standard specimen and the sample specimen are injected into the device to obtain a chromatogram, and weight average molecular weight is calculated according to an analysis method (System: Alliance 4, Column: Ultrahydrogel linear x 2, Eluent: 0.1 M NaNO3 pH 7.0 phosphate buffer, Flow rate: 0.1 mL/min, Temp: 40°C, Injection: 100 µL).

### Separator for lithium secondary battery

A separator for a lithium secondary battery according to the present invention includes a first coating layer including a first organic binder containing an ethylenically unsaturated group, and a second coating layer including a second organic binder and inorganic particles.

Typically, in order to improve the durability and conductivity of a separator, inorganic particles and the like have been coated on the surface of a substrate and used. However, the inorganic particles, a binder typically used and the like have low adhesion to a gel polymer electrolyte, and cannot perform a polymerization reaction, so that there has been a problem in that the adhesion to the electrolyte is significantly deteriorated. When the adhesion between the electrolyte and the separator is deteriorated, internal short circuit of a battery is induced, thereby deteriorating the safety of the battery.

Therefore, the inventors of the present invention have devised a separator having a separate layer including a first organic binder containing an ethylenically unsaturated group in addition to a typical inorganic particle coating layer. The ethylenically unsaturated group contained in the first organic binder may be subjected to a radical polymerization with an oligomer included in a composition for a gel polymer electrolyte.

More specifically, the composition for a gel polymer electrolyte may include an oligomer containing a (meth) acrylate group, an amide group, an oxyalkylene group, a siloxane group, and the like. The functional groups contained in the oligomer are functional groups which may be subjected to a radical polymerization reaction with the ethylenically unsaturated group included in first organic binder. Therefore, the oligomer and the first organic binder may be coupled in a three-dimensional structure through the radical polymerization reaction during a curing process of the composition for a gel polymer electrolyte, thereby improving the adhesion between the separator and the gel polymer electrolyte. Meanwhile, in the present invention, the adhesion between the separator and the gel polymer electrolyte is improved by the first coating layer including the first organic binder, and also, the adhesion between the separator and the electrode is maintained to be constant by the second coating layer including the second organic binder. Also, in the separator for a lithium secondary battery according to the present invention, the lamination order of the first and second coating layers may vary in consideration of the structure, use, and manufacturing process of a battery to be manufactured.

At this time, the thickness of the separator may be 0.1 to 20 µm, preferably 0.5 to 20 µm, more preferably 1.0 to 20 µm. When the thickness of the separator is in the above range, the mechanical properties and high-temperature durability of the separator may be maintained constant.

The substrate may be a porous substrate, and any porous substrate may be used without particular limitation as long as it is usable as a separator material of an electrochemical device. Examples of such porous substrate may include a non-woven fabric or a porous polymer film formed of at least one of polymer resins such as polyolefin, polyethylene, polyethylene terephthalate, polybutylene terephthalate, polyacetal, polyamide, polycarbonate, polyimide, polyetheretherketone, polyethersulfone, poloxylene oxide, polyphenylenesulfide, and polyethylene naphthalene, or a laminate of two or more thereof, but are not particularly limited thereto.

The first coating layer is to improve the adhesion between the gel polymer electrolyte, and includes the first organic binder containing an ethylenically unsaturated group. The ethylenically unsaturated group is coupled to the oligomer included in the composition for a gel polymer electrolyte through the radical polymerization reaction.

For example, the ethylenically unsaturated group may include at least one selected from the group consisting of a vinyl group, an acryloxy group and a methacryloxy group.

Meanwhile, the first organic binder may further include a unit including at least one selected from the group consisting of an alkylene group having at least one of halogen elements thereof (F, Cl, Br, I) substituted, an alkylene oxide group, an alkylene oxide group having at least one of halogen elements thereof (F, Cl, Br, I) substituted, an imide group, and celluloid.

At this time, the ethylenically unsaturated group may be positioned at an end portion of a polymer main chain or at a side portion of a polymer main chain composed of the units, and the number or position of functional groups attached is not specified.

For example, a unit containing an alkylene group having at least one of the halogen elements substituted may be represented by at least one selected from the units represented by Formulas X-1 to X-2 below.

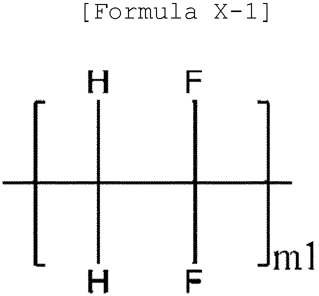

In Formula X-1, the m1 is an integer of 1 to 100.

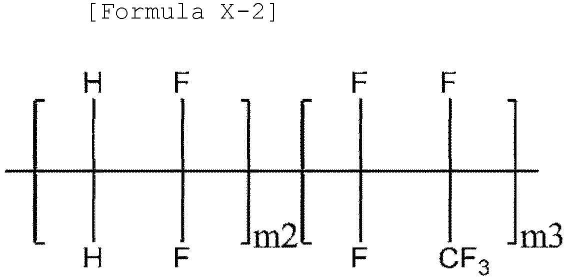

In Formula X-2, the m2 and the m3 are each independently an integer of 1 to 100.

For example, a unit containing an alkylene oxide group may be represented by the following Formula X-3.

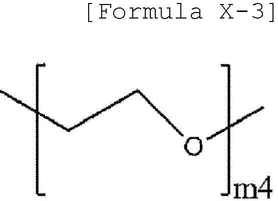

In Formula X-3, the m4 is an integer of 1 to 100.

For example, a unit containing an alkylene oxide group w hich is substituted with halogen element may be represented by the following Formula X-4.

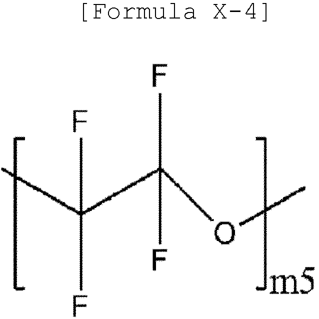

In Formula X-4, the m5 is an integer of 1 to 100.

For example, a unit containing the imide group may be represented by the following Formula X-5.

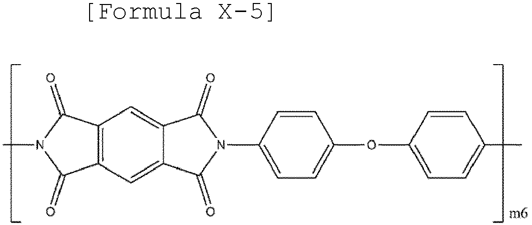

In Formula X-5, the m6 is an integer of 1 to 100.

For example, a unit containing the celluloid may be represented by the following Formula X-6.

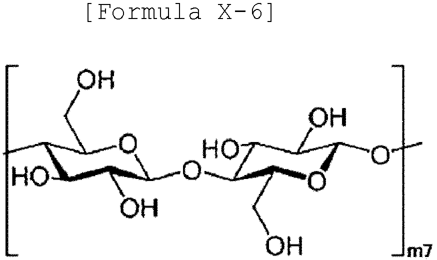

In Formula X-6, the m7 is an integer of 1 to 100.

Specifically, a compound used as the first organic binder is a compound having an ethylenically unsaturated group substituted at an end portion or a side portion of a polymer main chain including at least one unit selected from the group consisting of Formulas X-1 to X-6.

For example, a polymer or a copolymer including the units represented by Formulas X-1 to X-6 is usually formed by a free radical reaction or the like. At this time, at the end of the polymerization reaction, a functional group, a hydroxyl group, an alkyl oxide group, and an alkyl group or the like including a halogen element is attached to an end portion or a side portion of a main chain constituting a polymer or a copolymer by performing end-capping such that no more polymerization reaction occurs.

For example, when an end portion is processed with a functional group including a halogen element, a halogen compound such as sodium chloride (NaCl) may be used as an end-capping agent. However, the present invention is not limited to the above method, and the type of an end-capping agent is not also limited to the above material.

For example, when a halogen element and the like is positioned at the end portion or the side portion and reacted with a (meth) acrylate compound or a vinyl compound, the halogen element at the end portion is substituted with an ethylenically unsaturated group, such as a (meth) acryloxy group or a vinyl group. Through the reaction above, the first organic binder having an ethylenically unsaturated group may be prepared.

The first organic binder may be used alone in the first coating layer, or may be included in an amount of 1 part by weight to 80 parts by weight, preferably 5 parts by weight to 60 parts by weight, more preferably 5 parts by weight to 40 parts by weight based on 100 parts by weight of the first coating layer. When the first organic binder is included in the above range, the adhesion to the gel polymer electrolyte may be maintained above a predetermined level.

Meanwhile, the first coating layer may further include the inorganic particles in addition the first organic binder, and the inorganic particles may be included in an amount of remaining parts by weight excluding the first organic binder of the first coating layer. The inorganic particles will be described in more detail later.

The second coating layer may be formed directly on the surface of a substrate to enhance the durability of a separator substrate and improve the processability according to a lamination order, or when subjected to a lamination process and the like, may be formed on the first coating layer to prevent the first coating layer from being exposed to high temperatures. The second coating layer includes the second organic binder and the inorganic particles.

The second organic binder is used to fix the inorganic particles.

The second organic binder may be a typical binder. More specifically, the second organic binder may include a polymer including a unit including at least one selected from the group consisting of an alkylene group having at least one of halogen elements thereof (F, Cl, Br, I) substituted, an alkylene oxide group, an alkylene oxide group having at least one of halogen elements thereof (F, Cl, Br, I) substituted, an imide group, and celluloid.

For example, the second organic binder may include a polymer including at least one unit selected from the group consisting of Formulas X-1 to X-6, and descriptions of Formulas X-1 to X-6 are same as those described above, and thus will be omitted.

For example, the second organic binder may include a polyvinylidene fluoride-hexafluoropropylene copolymer (PVDF-co-HFP), polyvinylidenefluoride, and the like, but is not limited thereto.

Meanwhile, in addition to a polymer including a unit represented by the formulas, various copolymers and the like typically used, such as olyacrylonitrile, polymethylmethacrylate, polyvinyl alcohol, carboxymethyl cellulose (CMC), starch, hydroxypropyl cellulose, regenerated cellulose, polyvinylpyrrolidone, tetrafluoroethylene, polyethylene, polypropylene, poly acrylic acid, an ethylene-propylene-diene monomer (EPDM), a sulfonated EPDM, styrene-butadiene rubber (SBR), and fluorine rubber, may be used as the second organic binder.

The second organic binder may be included in an amount of 1 part by weight to 80 parts by weight, preferably 5 parts by weight to 60 parts by weight, more preferably 5 parts by weight to 40 parts by weight based on 100 parts by weight of the second coating layer. When the second organic binder is included in the above range, the de-intercalation of the inorganic particles is prevented and the adhesion and mechanical performance may be maintained above a predetermined level.

The inorganic particles form an interstitial volume between the particles, and thus form pores of a micro unit, and at the same time, serves as a kind of spacer capable of maintaining a physical shape. Also, the inorganic particles may transfer and move lithium ions, and thus may improve lithium ion conductivity. At this time, pores of a micro unit may be formed by controlling the size and content of the inorganic particles and the composition of the inorganic particles and a polymer. Also, the size and porosity of the pores may be controlled.

The inorganic particles may be inorganic particles typically used in the art. For example, the inorganic particles may include at least one element selected from the group consisting of Si, Al, Ti, Zr, Sn, Ce, Mg, Ca, Zn, Y, Pb, Ba, Hf, and Sr, and preferably, may include at least one element selected from the group consisting of Si, Al, Ti, and Zr.

More specifically, the inorganic particles may be SiO₂, Al₂O₃, TiO₂, ZrO₂, SnO₂, CeO₂, MgO, CaO, ZnO, Y₂O₃, Pb(Zr,Ti)O₃ (PZT), Pb₍₁₋ₐ₁₎Laₐ₁Zr_{(1-b1)}Ti_{b1}O₃ (0≤a1≤1, 0≤b1≤1, PLZT), PB(Mg₃Nb_{2/3})O₃-PbTiO₃ (PMN-PT), BaTiO₃, HfO₂(hafnia), SrTiO₃, and the like, and the inorganic materials listed above are characterized in that the physical properties thereof do not change even at a high temperature of 200°C or higher. More preferably, the inorganic particles may include at least one inorganic material selected from the group consisting of SiO₂, Al₂O₃, TiO₂, and ZrO₂.

The inorganic particles may be included in an amount of remaining parts by weight excluding the second organic binder based on 100 parts by weight of the second coating layer.

### Preparation method of separator for lithium secondary battery

Next, a method for preparing a separator for a lithium secondary battery according to the present invention will be described. A separator for a lithium secondary battery according to the present invention is prepared by forming, on the surface of a substrate, a first coating layer including a first organic binder containing an ethylenically unsaturated group, and a second coating layer including a second organic binder and inorganic particles.

For example, the first coating layer may be formed on the substrate, and then a second coating layer may be formed on the first coating layer. As another example, the second coating layer may be formed on the substrate, and then a first coating layer may be formed on the second coating layer.

Meanwhile, according to the formation order of the first and second coating layers, a separator for a lithium secondary battery in which substrate/first coating layer/second coating layer are laminated in such order, or in which substrate/second coating layer/ first coating layer are laminated in such order may be formed. The description for the reason why the lamination order is different is the same as those described above, and thus will be omitted.

The first coating layer may be formed under a temperature condition of 40°C to 110°C, preferably 50°C to 110°C, more preferably 60°C to 110°C. When the first coating layer is formed under the temperature condition, coating may be easily performed while minimizing the damage of the ethylenically unsaturated group.

More specifically, a first coating layer composition including the first organic binder containing the ethylenically unsaturated group is prepared. At this time, an organic solvent and the like may be used as a solvent in addition to the first organic binder. For example, N-methylpyrrole, acetone, and the like may be used. However, the kind of a solvent is not limited thereto. The solvent may be included such that the content of a solid including the first organic binder is 10 parts by weight to 50 parts by weight, preferably 10 parts by weight to 40 parts by weight based on 100 parts by weight of the first coating layer composition. When the solvent is included in the above range, applying is easily performed and processibility may be improved.

The second coating layer may be formed under a temperature condition of 120°C to 200°C, preferably 120°C to 190°C, more preferably 120°C to 180°C. When the second coating layer is formed under the temperature condition, the solvent used in a process of forming the coating layer may be effectively removed while preventing the separator from being damaged.

More specifically, a second coating layer composition including the second organic binder and the inorganic particles is prepared. At this time, a solvent typically used in a coating process of a separator may be used as a solvent in addition to the second organic binder and the inorganic particles. For example, N-methylpyrrole and the like may be used. The solvent may be included such that the content of a solid including the second organic binder and the inorganic particles is 10 parts by weight to 50 parts by weight, preferably 10 parts by weight to 40 parts by weight based on 100 parts by weight of the second coating layer composition. When the solvent is included in the above range, applying is easily performed and processibility may be maintained above a predetermined level.

### <Manufacturing of lithium secondary battery>

Next, a lithium secondary battery according to the present invention will be described. The lithium secondary battery according to yet another embodiment of the present invention includes an electrode assembly and a gel polymer electrolyte.

More specifically, the electrode assembly includes at least one positive electrode, at least one negative electrode, at least one unit cell including at least one first separator interposed between the positive electrode and the negative electrode, and a second separator interposed between the unit cells. At this time, the first separator and the second separator use the above separator, and since the description thereof is the same as that described above, a detailed description thereof will be omitted.

The positive electrode may be prepared by coating a positive electrode active material slurry including a positive electrode active material, a binder for electrode, a conductive agent, and a solvent on a positive electrode current collector.

The positive electrode current collector is not particularly limited as long as it has conductivity without causing a chemical change in the battery. For example, stainless steel, aluminum, nickel, titanium, fired carbon, or aluminum or stainless steel that is surface-treated with one of carbon, nickel, titanium, silver, and the like may be used.

The positive electrode active material is a compound capable of reversible intercalation and de-intercalation of lithium, and specifically, may include a lithium composite metal oxide containing one or more metals such as cobalt, manganese, nickel or aluminum, and lithium. More specifically, the lithium composite metal oxide may be a lithium-manganese-based oxide (e.g., LiMnO₂, LiMn₂O₄, etc.), a lithium-cobalt-based oxide (e.g., LiCoO₂, etc.), a lithium-nickel-based oxide (e.g., LiNiO₂, etc.), a lithium-nickel-manganese-based oxide (e.g., LiNi_{1-Y1}Mn_{Y1}O₂ (wherein 0<Y1<1), LiMn_{2-z1}Ni_{z1}O₄ (wherein 0<Z1<2), etc.), a lithium-nickel-cobalt-based oxide (e.g., LiNi_{1-Y2}CoY₂O₂ (wherein 0<Y2<1), etc.), a lithium-manganese-cobalt-based oxide (e.g., LiCo_{1-Y3}Mn_{Y3}O₂ (wherein 0<Y3<1), LiMn_{2-z2}Co_{z2}O₄ (wherein 0<Z2<2), etc.), a lithium-nickel-manganese-cobalt-based oxide (e.g., Li(Niₚ₁Co_{q1}Mnᵣ₁)O₂ (wherein 0<p1<1, 0<q1<1, 0<r1<1, p1+q1+r1=1) or Li(Niₚ₂CO_{q2}Mnᵣ₂)O₄ (wherein 0 < p2 < 2, 0 < q2 < 2, 0 < r2 < 2, p2+q2+r2=2), etc.), or a lithium-nickel-cobalt-transition metal (M) oxide (e.g., Li(Niₚ₃Co_{q3}Mnᵣ₃Mₛ₁)O₂ (wherein M is selected from the group consisting of Al, Fe, V, Cr, Ti, Ta, Mg, and Mo, and p3, q3, r3, and s1 are each an atomic fraction of independent elements, and 0<p3<1, 0<q3<1, 0<r3<1, 0<s1<1, p3+q3+r3+s1=1), etc.) and the like, and any one thereof or a compound of two or more thereof may be included.

Among these, due to the fact that the capacity properties and stability of a battery may be increased, the lithium composite metal oxide may be LiCoO₂, LiMnO₂, LiNiO₂, a lithium nickel-manganese-cobalt oxide (e.g., Li(Ni_{1/3}Co_{1/3}Mn_{1/3})O₂, Li (Ni_{0.6}Mn_{0.2}Co_{0.2})O₂, Li (Ni_{0.5}Mn_{0.3}Co_{0.2})O₂, or Li(Ni_{0.8}Mn_{0.1}Co_{0.1})O₂, etc.), or a lithium nickel cobalt aluminum oxide (e.g., LiNi_{0.8}Co_{0.15}Al_{0.05}O₂, etc.), and the like. When considering an remarkable improvement effect according to the control of type and content ratio of constituent elements forming a lithium composite metal oxide, the lithium composite metal oxide may be Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, or Li(Ni_{0.8}Mn_{0.1}Co_{0.1})O₂, and the like, and any one thereof or a mixture of two or more thereof may be used.

The positive electrode active material may be included in an amount of 60 wt% to 98 wt%, preferably 70 wt% to 98 wt%, more preferably 80 wt% to 98 wt% based on the total weight of a solid excluding the solvent from the positive electrode active material slurry.

The binder for electrode is a component for assisting in coupling between an active material and a conductive agent, and coupling to a current collector. Specifically, examples of the binder may include polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene (PE), polypropylene, an ethylene-propylene-diene monomer (EPDM), a sulfonated EPDM, styrene-butadiene rubber, nitrile-butadiene rubber, fluorine rubber, various copolymers thereof, and the like. Typically, the binder for electrode may be included in an amount of 1 wt% to 20 wt%, preferably 1 wt% to 15 wt%, more preferably 1 wt% to 10 wt% based on the total weight of a solid excluding the solvent from the positive electrode active material slurry.

The conductive agent is a component for further improving the conductivity of a positive electrode active material. The conductive agent is not particularly limited as long as it has conductivity without causing a chemical change in the battery. Examples of the conductive agent may include graphite; a carbon-based material such as carbon black, acetylene black, Ketjen black, channel black, furnace black, lamp black, and thermal black; a conductive fiber such as carbon fiber and metal fiber; metal powder such as fluorocarbon powder, aluminum powder, and nickel powder; a conductive whisker such as zinc oxide and potassium titanate; a conductive metal oxide such as titanium oxide; or a conductive material such as a polyphenylene derivative, and the like. Specific examples of a commercially available conductive material may include acetylene black series of Chevron Chemical Company, Denka Black of Denka Singapore Private Limited, Gulf Oil Company, etc., Ketjen black and EC series of Armak Company, Vulcan XC-72 of Cabot Company, and Super P of Timcal Company. The conductive agent may be included in an amount of 1-20 wt%, preferably 1-15 wt%, more preferably 1-10 wt% based on the total weight of a solid excluding the solvent from the positive electrode active material slurry.

The solvent may include an organic solvent such as N-methyl-2-pyrrolidone (NMP), and may be used in an amount such that a preferred viscosity is achieved when the positive electrode active material, and selectively, the binder and the conductive agent, and the like are included. For example, the solvent may be included in an amount such that the concentration of a solid including the positive electrode active material, and selectively the binder and the conductive agent is 60 wt% to 95 wt%, preferably 70 wt% to 95 wt%, more preferably 70 wt% to 90 wt%.

The negative electrode may be prepared, for example, by coating a negative electrode active material slurry including a negative electrode active material, a binder for electrode, a conductive agent, and a solvent on a negative electrode current collector.

The negative electrode current collector typically has a thickness of 3-500 µm. The negative electrode current collector is not particularly limited as long as it has high conductivity without causing a chemical change in the battery. For example, copper, stainless steel, aluminum, nickel, titanium, fired carbon, copper or stainless steel that is surface-treated with one of carbon, nickel, titanium, silver, and the like, an aluminum-cadmium alloy, and the like may be used. Also, microscopic irregularities may be formed on the surface of the negative electrode current collector to improve the coupling force of a negative electrode active material, and the negative electrode current collector may be used in various forms of such as a film, a sheet, a foil, a net, a porous body, a foam body, and a non-woven fabric body.

Examples of the negative electrode active material may include one or two or more kinds of negative active materials selected from the group consisting of natural graphite, artificial graphite, a carbonaceous material; a metal (Me) such as a lithium-containing titanium composite oxide (LTO), Si, Sn, Li, Zn, Mg, Cd, Ce, Ni or Fe; an alloy composed of the metals (Me); an oxide (MeOₓ) of the metal (Me); and a composite of the metal (Me) and carbon.

The negative electrode active material may be included in an amount of 60 wt% to 98 wt%, preferably 70 wt% to 98 wt%, more preferably 80 wt% to 98 wt% based on the total weight of a solid excluding the solvent from the negative electrode active material slurry.

The descriptions of the binder for electrode, conductive agent, and solvent are the same as those described above, and thus, detailed descriptions thereof will be omitted.

The gel polymer electrolyte is formed by polymerizing an oligomer containing a (meth) acrylate group. When the oligomer containing a (meth) acrylate group is used, a radical polymerization reaction with the first organic binder contained in the first coating layer occurs to form a polymer network in a three-dimensional structure..

For example, the oligomer may further include an oxyalkylene group. Specifically, the oligomer may be represented by Formula 1 below.

[Formula 1] A-C₁-A'

In Formula 1, the A and A' are each independently a unit containing a (meth) acrylate group, and the C₁ is a unit containing an oxyalkylene group.

Specifically, the units A and A' are each a unit including a (meth) acrylate group such that an oligomer may be polymerized. When the meta-acrylate group is included, a polymer network may be formed by reacting with an ethylenically unsaturated group included in the first organic binder. The units A and A' may be derived from a monomer including monofunctional or polyfunctional (meth) acrylate or (meth) acrylic acid.

For example, the units A and A' may each independently contain at least one of the units represented by Formula A-1 to Formula A-5 below.

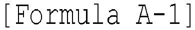

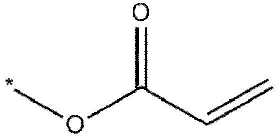

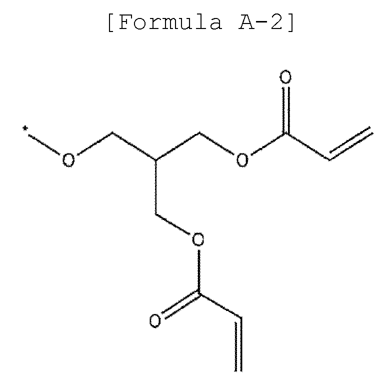

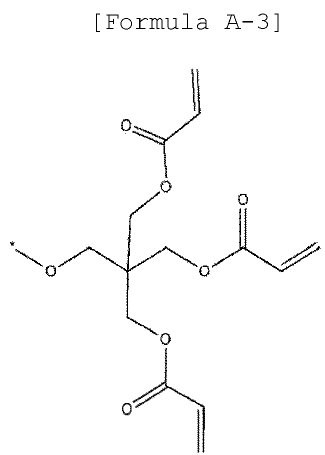

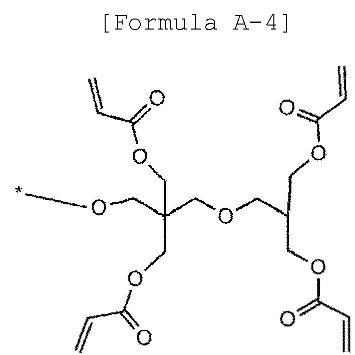

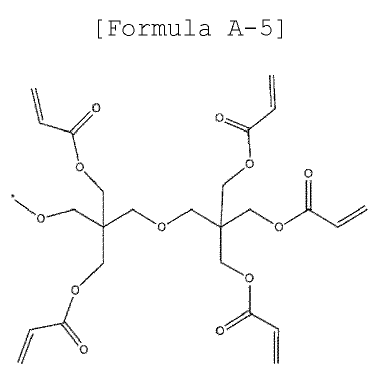

The unit C1 may include a unit represented by Formula C1-1.

[The unit C1 may include a unit represented by

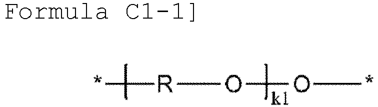

In Formula C₁-1, R is a substituted or unsubstituted linear-type or branched-type alkylene group having 1 to 10 carbon atoms, and k1 is an integer of 1 to 30.

In another example, in Formula C₁-1, the R may be independently -CH₂CH₂- or -CHCH₃CH₂-.

For example, according to one embodiment of the present invention, the oligomer may be at least one compound selected from the group consisting of Formula 1-1 to Formula 1-5 below.

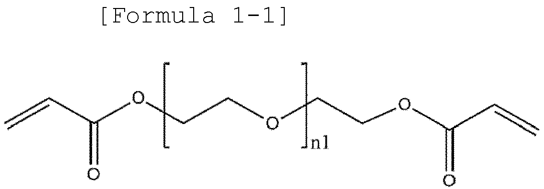

In Formula 1-1, the n1 is an integer of 1 to 20,000.

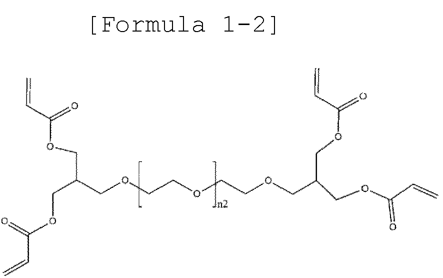

In Formula 1-2, the n2 is an integer of 1 to 20,000.

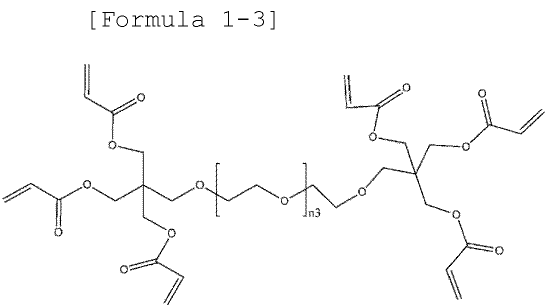

In Formula 1-3, the n3 is an integer of 1 to 20,000.

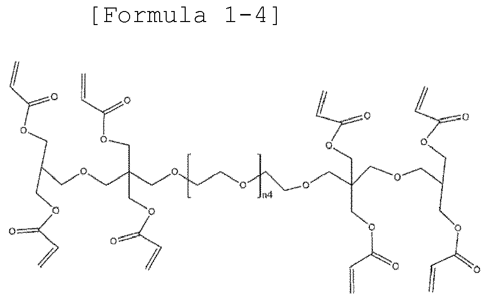

In Formula 1-4, the n4 is an integer of 1 to 20,000.

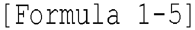

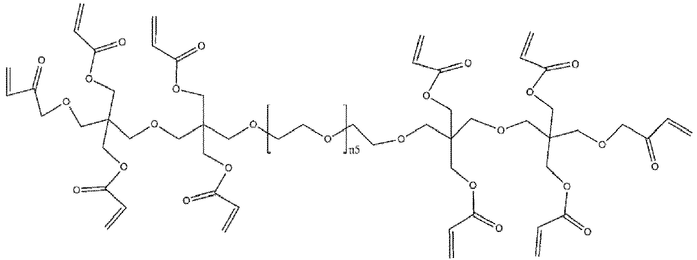

In Formula 1-5, the n5 is an integer of 1 to 20,000.

In Formula 1-1 to Formula 1-5, the n1 to n5 are each independently an integer of 1 to 20,000, preferably an integer of 1 to 10,000, and more preferably an integer of 1 to 5,000.

In another example, the oligomer may be represented by Formula 2 below.

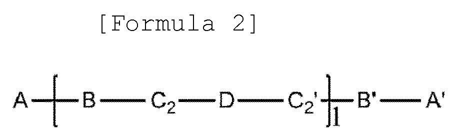

In Formula 2, the A and A' are each independently a unit containing a (meth) acrylate group, which are the same as described above, the B and B' are each independently a unit containing an amide group, the C₂ and C₂' are each independently a unit containing an oxyalkylene group, the D is a unit containing a siloxane group, and 1 is an integer of 1 to 200.

Meanwhile, the 1 may be preferably an integer of 10 to 200, more preferably 1 to 150. When the 1 is in the above range, while the mechanical properties of a polymer formed by the oligomer are high, the fluidity thereof is maintained above a predetermined level, so that the polymer may be uniformly dispersed inside a battery, and wettability may be maintained above a predetermined level.

In addition, the B and B' are each independently a unit containing an amide group, which control ion transfer properties and impart mechanical properties in implementing a polymer electrolyte. For example, the B and B' may each independently include a unit represented by Formula B-1 below.

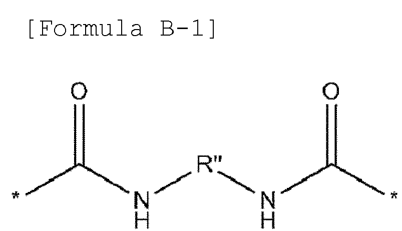

In Formula B-1, R' is at least one selected from the group consisting of a linear or non-linear alkylene group having 1 to 10 carbon atoms, a substituted or unsubstituted cycloalkylene group having 3 to 10 carbon atoms, a substituted or unsubstituted bicycloalkylene group having 6 to 20 carbon atoms, a substituted or unsubstituted arylene group having 6 to 20 carbon atoms, a unit represented by Formula R"-1 below, and a unit represented by Formula R"-2 below.

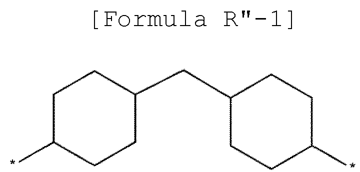

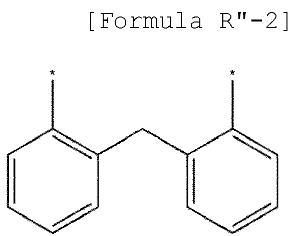

In another example, in Formula B-1, the R" may include at least one of the units represented by Formulas R"-3 to R"-8 below. 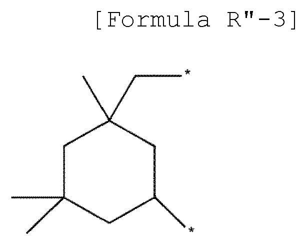 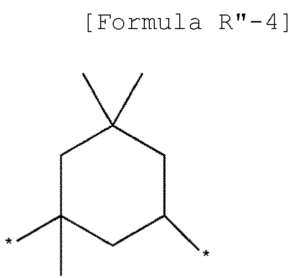 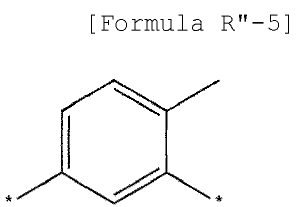 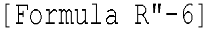 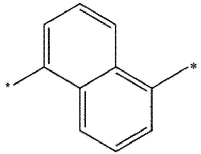 * 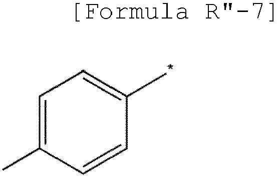 *

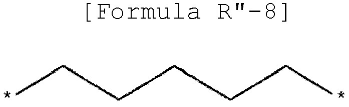

Also, in implementing the polymer electrolyte of the present invention, the units C₂ and C₂' are each independently a unit containing an oxyalkylene group. The units C₂ and C₂' are used to control the dissociation and ion transport capacity of the salt in the polymer network.

For example, the C₂ and C₂' may each independently include a unit represented by Formula C₂-1 below.

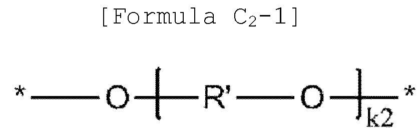

In Formula C₂-1, R' is a substituted or unsubstituted linear-type or branched-type alkylene group having 1 to 10 carbon atoms, and k2 is an integer of 1 to 30.

In another example, in Formula C₂-1, the R' may be - CH₂CH₂- or -CHCH₃CH₂-.

Also, the unit D contains a siloxane group and is to control mechanical properties and the affinity with the separator. Specifically, a structure for securing the flexibility in a region other than the region of a rigid structure due to an amide bond may be formed in the polymer network.

For example, the unit D may include a unit represented by Formula D-1.

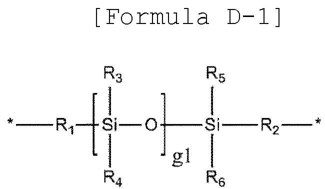

In Formula D-1, R₁ and R₂ are linear or non-linear alkylene groups having 1 to 5 carbon atoms, R₃, R₄, R₅, and R₆ are each independently hydrogen, an alkyl group having 1 to 5 carbon atoms, or an aryl group having 6 to 12 carbon atoms, and g1 is an integer of 1 to 400.

Meanwhile, the g1 may be preferably an integer of 1 to 300, more preferably 1 to 200.

In another example, the unit D may include a unit represented by Formula D-2 below.

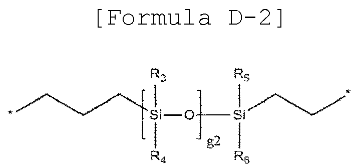

In Formula D-2, R₃, R₄, R₅, and R₆ are each independently hydrogen, an alkyl group having 1 to 5 carbon atoms, or an aryl group having 6 to 12 carbon atoms, and g2 may be an integer of 1 to 400, preferably an integer of 1 to 300, more preferably an integer of 1 to 200.

More specifically, the D-1 may be at least one selected from the units represented by Formulas D-3 and D-4 below.

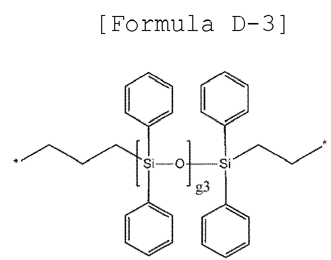

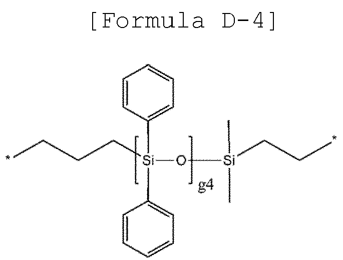

In Formulas D-3 and D-4, the g3 and the g4 may be each independently an integer of 1 to 400, preferably an integer of 1 to 300, and more preferably an integer of 1 to 200.

For example, according to one embodiment of the present invention, the oligomer may be at least one compound selected from the group consisting of the compounds represented by Formulas 2-1 to 2-5 below.

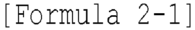

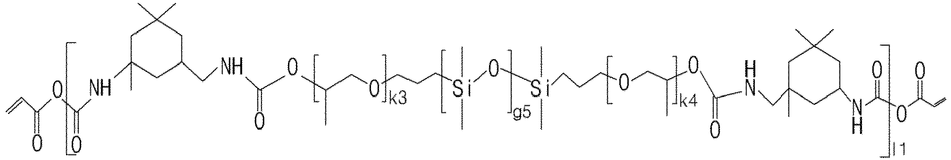

In Formula 2-1, the k3 and the k4 are each independently an integer of 1 to 30, and the g5 is an integer of 1 to 400. The 11 is an integer of 1 to 200.

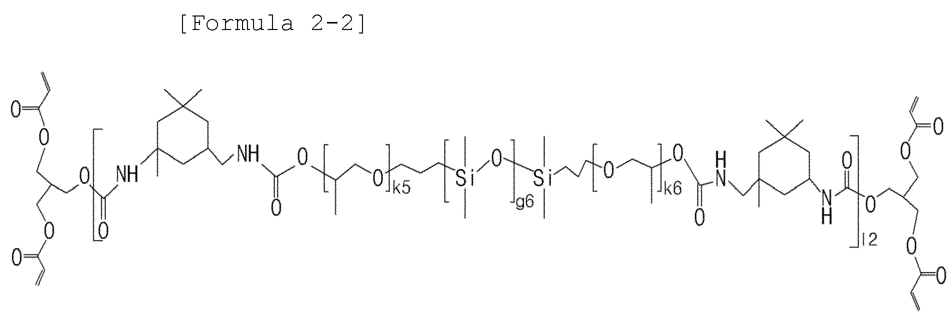

In Formula 2-2, the k5 and the k6 are each independently an integer of 1 to 30, and the g6 is an integer of 1 to 400. The 12 is an integer of 1 to 200.

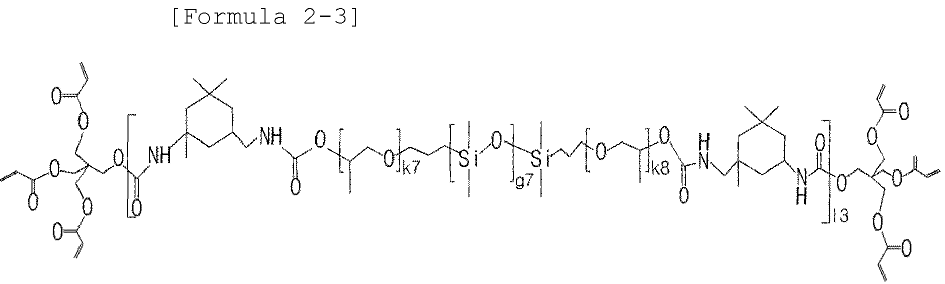

In Formula 2-3, the k7 and the k8 are each independently an integer of 1 to 30, and the g7 is an integer of 1 to 400. The 13 is an integer of 1 to 200.

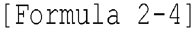

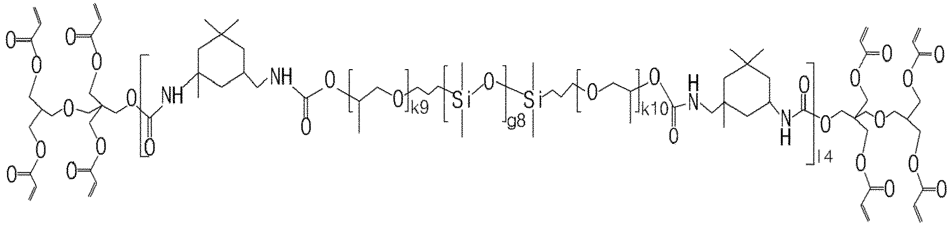

In Formula 2-4, the k9 and the k10 are each independently an integer of 1 to 30, and the g8 is an integer of 1 to 400. The 14 is an integer of 1 to 200.

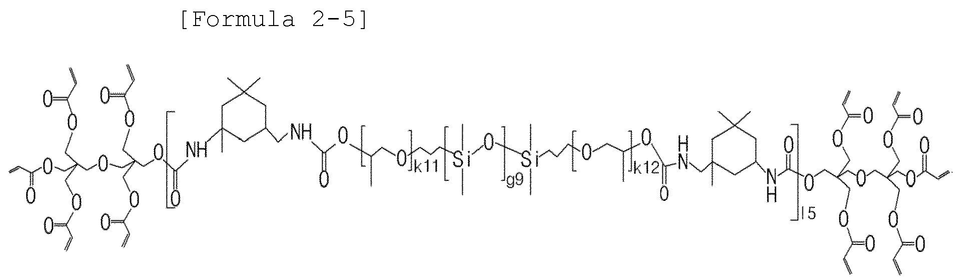

In Formula 2-5, the k11 and the k12 are each independently an integer of 1 to 30, and the g9 is an integer of 1 to 400. The 15 is an integer of 1 to 200.

Meanwhile, in Formulas 2-1 to 2-5, the 11 to the 15 may be preferably each independently an integer of 1 to 150, more preferably an integer of 1 to 100. When the 11 to the 15 are in the above range, while the mechanical properties of a polymer formed by the oligomer are high, the fluidity thereof is maintained above a predetermined level, so that the polymer may be uniformly dispersed inside a battery.

Also, the oligomer of the present invention may have a weight average molecular weight of about 1,000 to about 100,000. When the weight average molecular weight of the oligomer is in the above range, the mechanical strength of a battery including the same may be effectively improved.

Meanwhile, the gel polymer electrolyte is preferably formed by injecting a gel polymer electrolyte composition including the oligomer into a battery case and then curing the composition.

More specifically, a secondary battery according to the present invention may be manufactured by (a) inserting an electrode assembly into a battery case, and (b) injecting into the battery case the composition for a gel polymer electrolyte according to the present invention, followed by polymerizing to form a gel polymer electrolyte.

At this time, the polymerization reaction may be performed by E-BEAM, gamma ray, a room temperature/high-temperature aging process.

Meanwhile, a lithium secondary battery according to the present invention may be a lamination-folding-type or lamination-stacked-type lithium secondary battery. Specifically, the lamination-stacked-type lithium secondary battery may be manufactured by forming a unit cell including a positive electrode/separator/negative electrode through a lamination process in which one or more positive electrodes or one or more negative electrodes and one or more separators are first adhered, interposing separators between the unit cells and stacking/welding the same to form an electrode assembly, inserting the electrode assembly into a battery case, and then injecting an electrolyte thereinto. Meanwhile, the lamination-folding-type lithium secondary battery may be manufactured by folding the unit cells prepared through the lamination process using a long separator sheet to form an electrode assembly, inserting the electrode assembly into a battery case, and then injecting an electrolyte thereinto.

At this time, when the separator for a lithium secondary battery according to the present invention which has first and second coating layers is used, while improving the adhesion between the gel polymer electrolyte and the separator by the ethylenically unsaturated group of the first organic binder, the adhesion may be maintained constant even through the lamination process by the second organic binder included in the second coating layer, so that a unit cell may be stably manufactured.

Also, various battery cases used in the art may be used as the battery case without limitation. For example, a battery case of a cylindrical shape, a square shape, a pouch shape, a coin shape, or the like may be used.

Meanwhile, the composition for a gel polymer electrolyte may include a lithium salt, a non-aqueous organic solvent, and a polymerization initiator in addition to the oligomer.

Any lithium salt may be used without particular limitation as long as it is typically used in an electrolyte for a lithium secondary battery. For example, the lithium salt may include Li⁺ as positive ions, and may include at least one selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (F₂SO₂)₂N⁻, CF₃CF₂(CF₃)₂CO⁻, (CF₃SO₂)₂CH⁻, CF₃(CF₂)₇SO₃⁻, CF₃CO₂⁻, CH₃CO₂⁻, SCN⁻, and (CF₃CF₂SO₂)₂N⁻ as negative ions. The lithium salt may include a single material or a mixture of two or more materials, when needed. The content of the lithium salt may be appropriately changed within a range that is typically usable. However, in order to obtain an optimum effect of forming an anti-corrosive coating on the surface of an electrode, the lithium salt may be included in the electrolyte at a concentration of 0.8 M to 2 M, specifically 0.8 M to 1.5 M. However, the content of the lithium salt is not limited to the above range, and the lithium salt may be included at a high concentration of 2 M or higher depending on other components in the composition for a gel polymer electrolyte.

Any non-aqueous organic solvents typically used in an electrolyte for lithium secondary battery may be used without limitation as the non-aqueous organic solvent. For example, an ether compound, an ester compound, an amide compound, a linear carbonate compound, or a cyclic carbonate compound may be used alone or in combination of two or more thereof. Among the above, typical examples may include a cyclic carbonate compound, a linear carbonate compound, or a mixture thereof.

Specific examples of the cyclic carbonate compound may include any one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, and fluoroethylene carbonate (FEC), or a mixture of two or more thereof. Also, specific examples of the linear carbonate compound may include any one selected from the group consisting of dimethyl carbonate (DMC), diethyl carbonate (DEC), dipropyl carbonate, ethyl methyl carbonate (EMC), methyl propyl carbonate, and ethyl propyl carbonate, or a mixture of two or more thereof, but are not limited thereto.

Specifically, among the carbonate-based organic solvents, a cyclic carbonate such as ethylene carbonate and propylene carbonate which are organic solvents having high viscosity and high dielectric constant, thereby dissociating a lithium salt in an electrolyte well, may be used. When a linear carbonate such as dimethyl carbonate and diethyl carbonate having low viscosity and low dielectric constant is mixed with such cyclic carbonate in an appropriate ratio and used, an electrolyte having high electrical conductivity may be prepared.

Also, among the non-aqueous organic solvents, the ether compound may be any one selected from the group consisting of dimethyl ether, diethyl ether, dipropyl ether, methyl ethyl ether, methyl propyl ether, and ethyl propyl ether, or a mixture of two or more thereof, but is not limited thereto.

Also, among the non-aqueous organic solvents, the ester compound may be any one selected from the group consisting linear esters such as methyl acetate, ethyl acetate, propyl acetate, methyl propionate, ethyl propionate, propyl propionate, and butyl propionate; and cyclic esters such as γ-butyrolactone, γ-valerolactone, γ-caprolactone, σ-valerolactone, and ε-caprolactone, or a mixture of two or more thereof, but is not limited thereto.

The polymerization initiator is decomposed by heat, a non-limiting example thereof may be 30°C to 100°C, specifically 60°C to 80°C, in a battery, or decomposed at room temperature (5°C to 30°C) to form a radical. The oligomer may be reacted by a free radical polymerization reaction through the radical to form the gel polymer electrolyte.

The polymerization initiator may be any typical polymerization initiator known in the art, and may be at least one selected from the group consisting of an azo-based compound, a peroxide-based compound, or a mixture thereof.

For example, the polymerization initiator may be an organic peroxide or a hydroperoxide such as benzoyl peroxide, acetyl peroxide, dilauryl peroxide, di-tert-butyl peroxide, t-butyl peroxy-2-ethyl-hexanoate, cumylhydroperoxide, and hydrogen peroxide, or at least one azo compound selected from the group consisting of 2,2'-azobis (2-cyanobutane), dimethyl 2,2'-azobis (2-methylpropionate), 2,2'-azobis (methylbutyronitrile), 2,2'-azobis (isobutyronitrile) (AIBN), and 2,2'-azobisdimethyl-valeronitrile (AMVN), but is not limited thereto.

The polymerization initiator may be included in an amount of 0.1 wt% to 5 wt% based on the total weight of the oligomer. When the polymerization initiator is included in an amount greater than 5 wt%, the unreacted polymerization initiator may remain when preparing a gel polymer electrolyte to adversely affect the performance of a battery. On the other hand, when the polymerization initiator is included in an amount less than 0.01 wt%, gelation may not be achieved even under a condition above a predetermined temperature.

According to another embodiment of the present invention, a battery module including the lithium secondary battery, and a battery pack including the same are provided. The battery module and the battery pack include the lithium secondary battery having high capacity, high rate properties, and cycle properties, and thus may be used as a power source of a medium-and-large sized device selected from the group consisting of an electric vehicle, a hybrid electric vehicle, a plug-in hybrid electric vehicle, and a power storage system.

### MODE FOR CARRYING OUT THE INVENTION

Hereinafter, the present invention will be described in more detail with reference to specific examples. However, the following examples are merely illustrative of the present invention and are not intended to limit the scope of the present invention. It will be apparent to those skilled in the art that various changes and modifications can be made without departing from the scope and spirit of the invention, and it is obvious that such variations and modifications are within the scope of the appended claims.

### [Examples]

### 1. Example 1

### (1) Preparing first organic binder

In a nitrogen atmosphere, vinylidene fluoride (VDF) as a monomer, diisopropylperoxydicarbonate as a free radical initiator, and 1,1,2-trichlorotrifluoroethane as a solvent were introduced into a reactor cooled to -15°C. Thereafter, while maintaining 45°C to initiate polymerization, a polymerization reaction was performed by stirring the reactant at 200 rpm such that a unit represented by Formula X-1 is repeated. 10 hours later, NaCl was introduced to terminate the polymerization reaction by substituting Cl at an end of the polymerized compound, and monomers not involved in the polymerization reaction were discharged.

The polymerized compound was dispersed in N-methylpyrrole as a solvent, and then acryl acid was introduced thereto at a molar ratio of 1:1.1 based on the polymerized compound, and stirred 200 rpm in the presence of NaOH while maintaining 45°C. 10 hours later, a drying process was performed at 120°C to obtain a first organic binder having Cl at the end thereof substituted with an acryloxy group.

### (2) Preparing first coating layer composition

A first coating layer composition was prepared by adding 3 g of the prepared first organic binder and 27 g of an aluminum oxide (Al₂O₃) as inorganic particles in 100 mL of N-methylpyrrole as a solvent.

### (3) Preparing second coating layer composition

A second coating layer composition was prepared by adding 3 g of polyvinylidene difluoride (PVdF, weight average molecular weight=100,000) and 27 g of Al₂O₃ as inorganic particles in 72.1 ml of N-methylpyrrole as a solvent.

### (4) Preparing separator for lithium secondary battery

A first coating layer having a thickness of 4 µm was formed by applying the first coating layer composition on a polyethylene substrate having a thickness of 10 µm, and then drying the substrate at a temperature of 100°C. Thereafter, a second coating layer having a thickness of 6 µm was formed by applying the second coating layer composition on the first coating layer, and then drying the first coating layer at a temperature of 120°C. A separator (20 µm) for lithium secondary battery was prepared.

### 2. Example 2

In a nitrogen atmosphere, a monomer in which vinylidene fluoride (VDF) and hexafluoropropylene (HFP) are mixed at a weight ratio of 7:3, diisopropylperoxydicarbonate as a free radical initiator, and 1,1,2-trichlorotrifluoroethane as a solvent were introduced into a reactor cooled to -15°C. Thereafter, while maintaining 45°C to initiate polymerization, a polymerization reaction was performed by stirring the reactant at 200 rpm such that a unit represented by Formula X-2 is repeated. 10 hours later, NaCl was introduced to terminate the polymerization reaction by substituting Cl at an end of the polymerized compound, and monomers not involved in the polymerization reaction were discharged.

The polymerized compound was dispersed in N-methylpyrrole as a solvent, and then acryl acid was introduced thereto at a molar ratio of 1:1.1 based on the polymerized compound, and stirred 200 rpm in the presence of NaOH while maintaining 45°C. 10 hours later, a drying process was performed at 120°C to obtain a first organic binder having Cl at the end thereof substituted with an acryloxy group.

A separator for a lithium secondary battery was prepared in the same manner as in Example 1 except that a first organic binder prepared according to Example 2 was used instead of a first organic binder prepared according to Example 1.

### 3. Example 3

A second coating layer having a thickness of 6 µm was formed by applying the second coating layer composition on a polyethylene substrate having a thickness of 10 µm, and then drying the substrate at a temperature of 120°C. Thereafter, a separator for a lithium secondary battery was prepared in the same manner as in Example 1 except that a first coating layer having a thickness of 4 µm was formed under a temperature condition of 100°C after applying the first coating layer composition on the second coating layer.

### 4. Example 4

A second coating layer having a thickness of 6 µm was formed by applying the second coating layer composition on a polyethylene substrate having a thickness of 10 µm, and then drying the substrate at a temperature of 120°C. Thereafter, a separator for a lithium secondary battery was prepared in the same manner as in Example 2 except that a first coating layer having a thickness of 4 µm was formed under a temperature condition of 100°C after applying the first coating layer composition on the second coating layer.

### Comparative Example

### 1. Comparative Example 1

A separator for a lithium secondary battery was prepared in the same manner as in Example 1 except that the second coating layer was not formed.

### 2. Comparative Example 2

A separator for a lithium secondary battery was prepared in the same manner as in Example 1 except that the first coating layer was not formed.

### 3. Comparative Example 3

Unlike the above examples, a polyethylene substrate without the first and second coating layers was used as a separator for a lithium secondary battery.

### [Manufacturing Example] Manufacturing of lithium secondary battery

94 wt% of LiNi_{0.8}Co_{0.1}Mn_{0.1}O₂ (NCM) as a positive electrode active material, 3 wt% of carbon black as a conductive agent, and 3 wt% of polyvinylidene fluoride (PVDF) as a binder were added to N-methyl-2-pyrrolidone(NMP) as a solvent to prepare a positive electrode active material slurry. The positive electrode active material slurry was applied to an aluminum (Al) thin film having a thickness of about 20 µm, which is a positive electrode current collector, dried and then roll pressed to manufacture a positive electrode.

96 wt% of carbon powder as a negative electrode active material, 3 wt% of PVDF as a binder, and 1 wt% of carbon black as a conductive agent were added to NMP as a solvent to prepare a negative electrode active material slurry. The negative electrode active material was applied to a copper (Cu) thin film having a thickness of about 10 µm, which is a negative electrode current collector, dried and then roll pressed to manufacture a negative electrode.

An electrode assembly was assembled by using the positive electrode, the negative electrode, and each the separators prepared in Examples 1 to 4 and Comparative Examples 1 to 3, respectively.

94.99 g of an organic solvent in which 1 M of LiPF₆ is dissolved in ethylene carbonate (EC):ethyl methyl carbonate (EMC) = 3:7 (volume ratio) was added with 5 g of a compound (n1=3) represented by Formula 1-1 and 0.01 g of dimethyl 2,2'-azobis (2-methylpropionate) (CAS No. 2589-57-3), which is a polymerization initiator, to prepare a gel polymer electrolyte composition.

An electrode assembly was placed in a battery case, and then the gel polymer electrolyte composition was introduced thereinto. The electrode assembly was stored for 2 days at room temperature, and heated for 5 hours at 65°C to manufacture a lithium secondary battery including a thermally-polymerized gel polymer electrolyte.

### [Experimental Examples]

### 1. Experimental Example 1: Initial capacity measurement test

The lithium secondary batteries each manufactured by using the separators prepared in Examples 1 to 4, respectively, and the lithium secondary batteries each manufactured by using the separators prepared in Comparative Examples 1 to 3, respectively, were subjected to a formation process at a current of 100 mA (0.1 C rate). Thereafter, 4.2 V, 333 mA (0.3 C, 0.05 C cut-off) CC/CV charge and 3 V, 333 mA (0.3 C) CC discharge were repeated three times, and the third discharge capacity was defined as the initial capacity. The results are shown in Table 1 below.

**[Table 1]**

| | Initial capacity (mAh) |
|---|---|
| Example 1 | 2015 ± 5 |
| Example 2 | 2015 ± 5 |
| Example 3 | 2010 ± 5 |
| Example 4 | 2020 ± 5 |
| Comparative Example 1 | 2000 ± 5 |
| Comparative Example 2 | 1985 ± 5 |
| Comparative Example 3 | 1970 ± 5 |

Referring to Table 1, the lithium secondary batteries of Examples 1 to 4 have high adhesion between the gel polymer electrolyte and the separator, so that higher initial capacity may be obtained at high voltages.

Meanwhile, as shown in Table 1, the lithium secondary batteries of Comparative Examples 1 to 3 have lower adhesion between the electrolyte and the separator when compared with the lithium secondary batteries of Examples 1 to 4 and lack interface properties, so that the initial capacity thereof is relatively low.

### 2. Experimental Example 2: Cycle (Lifespan) measurement

The lithium secondary batteries each manufactured by using the separators prepared in Examples 1 to 4, respectively, and the lithium secondary batteries each manufactured by using the separators prepared in Comparative Examples 1 to 3, respectively, were subjected to a formation process at a current of 100 mA (0.1 C rate). Thereafter, 4.2 V, 333 mA (0.3 C, 0.05 C cut-off) CC/CV charge and 3 V, 333 mA (0.3 C) CC discharge were repeated 100 times, and the capacity retention rate was measured by comparing the 100th discharge capacity with the initial capacity (the third discharge capacity when the charge/discharge cycle was repeated three times). The results are shown in Table 2.

**[Table 2]**

| | Capacity retention rate (%) after 100th cycle (%) |
|---|---|
| Example 1 | 99 |
| Example 2 | 99 |
| Example 3 | 99 |
| Example 4 | 98 |
| Comparative Example 1 | 96 |
| Comparative Example 2 | 95 |
| Comparative Example 3 | 90 |

Referring to Table 2, the lithium secondary batteries of Examples 1 to 4 have excellent interface adhesion between the gel polymer electrolyte and the separator and an excellent gel polymer electrolyte distribution, so that an additional deterioration reaction of the electrolyte is suppressed, resulting in the improvement of cycle life.

Meanwhile, as shown in Table 2, the lithium secondary batteries of Comparative Examples 1 to 3 have lower adhesion between the electrolyte and the separator when compared with the lithium secondary batteries of Examples 1 to 4 and lack interface properties, so that additional deterioration of the electrolyte occurs, resulting in the decrease in capacity retention rate after a cycle.

### 3. Experimental Example 3: Nail penetration test

When each of the fully-charged lithium secondary batteries manufactured in Examples 1 to 4 and Comparative Examples 1 to 3 was penetrated with a metal nail having a diameter of 2.5 mm at a rate of 600 mm/min, a heat generation temperature and an ignition state of the battery were measured to perform a safety evaluation test of the secondary battery by means of mechanical shock and internal short circuit.

Internal short circuit of the lithium secondary battery occurs due to the metal nail, causing the battery to be heated. The higher the heat generation temperature, the higher the likelihood of ignition, so that the safety is evaluated to be low. Also, when such heat generation leads to ignition, the safety of the secondary battery is evaluated to be very low.

**[Table 3]**

| | Heat generation temperature (°C) | Ignition or no ignition Number of cells ignited/total number of cells tested |
|---|---|---|
| Example 1 | 80 | 1/5 |
| Example 2 | 80 | 1/5 |
| Example 3 | 80 | 1/5 |
| Example 4 | 80 | 1/5 |
| Comparative Example 1 | 100 | 5/5 |
| Comparative Example 2 | 150 | 5/5 |
| Comparative Example 3 | 180 | 3/5 |

As shown in Table 3, the lithium secondary batteries of Examples 1 to 4 have a low heat generation temperature of about 80°C, thereby having excellent safety, whereas the lithium secondary batteries of Comparative Examples 1 to 3 each have a heat generation temperature exceeding 100°C, thereby having poor safety. Also, even when the safety was evaluated based on the number of cells ignited, it can be seen that the lithium secondary batteries Examples 1 to 4 are safer.

## Claims

1. A separator for a lithium secondary battery, the separator comprising:
a substrate;
a first coating layer including a first organic binder containing an ethylenically unsaturated group; and
a second coating layer including a second organic binder and inorganic particles.

2. The separator of claim 1, wherein the first coating layer is formed on the surface of the substrate, and the second coating layer is formed on the first coating layer.

3. The separator of claim 1, wherein the second coating layer is formed on the surface of the substrate, and the first coating layer is formed on the second coating layer.

4. The separator of claim 1, wherein the ethylenically unsaturated group comprises at least one selected from the group consisting of a vinyl group, an acryloxy group and a methacryloxy group.

5. The separator of claim 1, wherein the first organic binder and the second organic binder each independently comprise a polymer including at least one unit selected from the group consisting of Formulas X-1 to X-6. 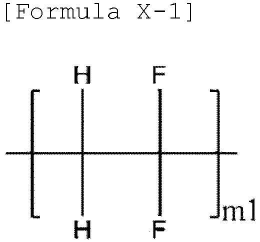 in Formula X-1, the m1 is an integer of 1 to 100 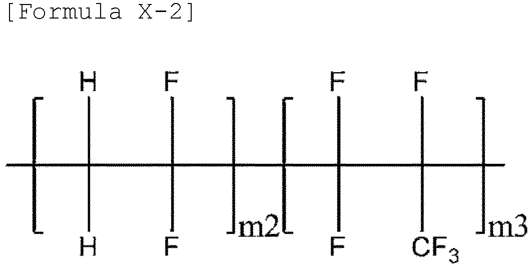 in Formula X-2, the m2 and the m3 are each independently an integer of 1 to 100 [Formula X-3] 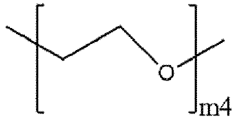 in Formula X-3, the m4 is an integer of 1 to 100 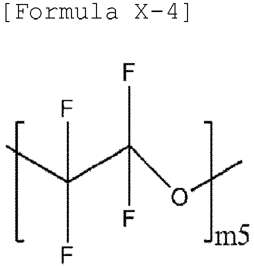 in Formula X-4, the m5 is an integer of 1 to 100 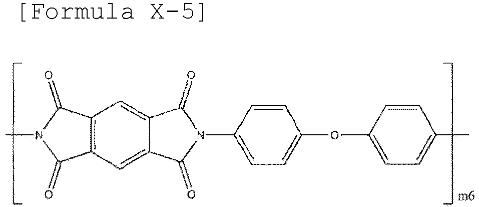 in Formula X-5, the m6 is an integer of 1 to 100 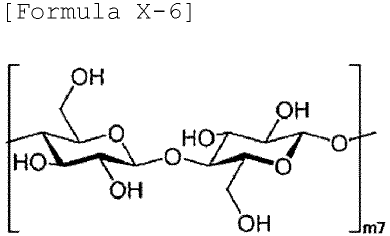 in Formula X-6, the m7 is an integer of 1 to 100

6. A method for preparing a separator for a lithium secondary battery, the method comprising,
forming, on the surface of a substrate, a first coating layer including a first organic binder containing an ethylenically unsaturated group and a second coating layer including a second organic binder and inorganic particles.

7. The method of claim 6, wherein the first coating layer is formed on the substrate, and then a second coating layer is formed on the first coating layer.

8. The method of claim 6, wherein the second coating layer is formed on the substrate, and then a first coating layer is formed on the second coating layer.

9. The method of claim 6, wherein the temperature condition in the forming of the first coating layer is 40°C to 110°C, and the temperature condition in the forming of the second coating layer is 120°C to 200°C.

10. A lithium secondary battery comprising:
an electrode assembly including: at least one unit cell including at least one positive electrode, at least one negative electrode, and at least one first separator interposed between the positive electrode and the negative electrode; and a second separator interposed between the unit cells; and
a gel polymer electrolyte formed by polymerizing an oligomer containing a (meth) acrylate group, wherein
the first separator and the second separator comprise each:
a first coating layer including a first organic binder containing an ethylenically unsaturated group; and
a second coating layer including a second organic binder and inorganic particles, and
a polymer network in a three-dimensional structure is formed by polymerizing the first organic binder containing an ethylenically unsaturated group and the oligomer containing a (meth) acrylate group.

11. The lithium secondary battery of claim 10, wherein the oligomer is represented by Formula 1 below:
[Formula 1] A-C₁-A'
in Formula 1, the A and A' are each independently a unit containing a (meth) acrylate group, and the C₁ is a unit containing an oxyalkylene group.

12. The lithium secondary battery of claim 10, wherein the oligomer comprises at least one compound selected from the compounds represented by Formula 1-1 to Formula 1-5 below: 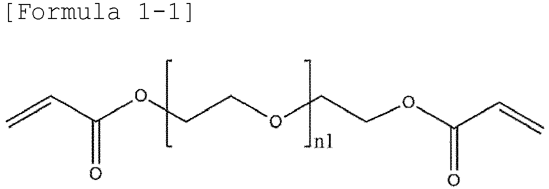 in Formula 1-1, the n1 is an integer of 1 to 20,000 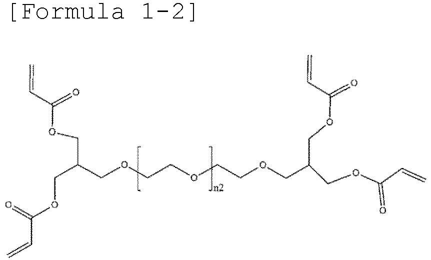 in Formula 1-2, the n2 is an integer of 1 to 20,000 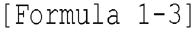 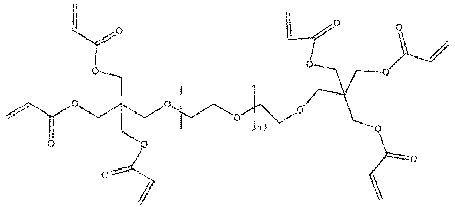 in Formula 1-3, the n3 is an integer of 1 to 20,000 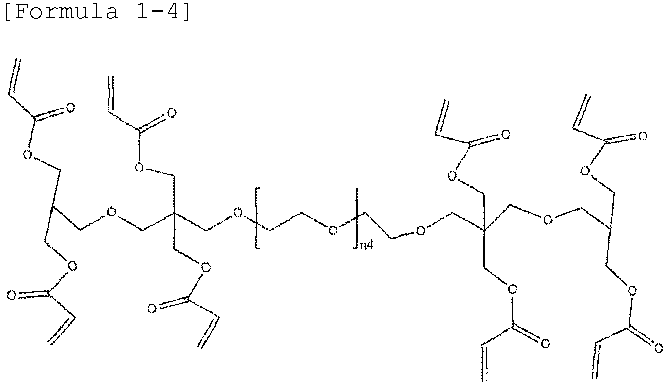 in Formula 1-4, the n4 is an integer of 1 to 20,000 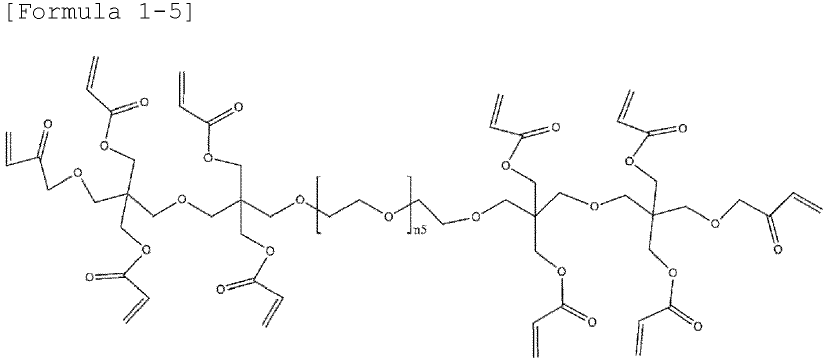 in Formula 1-5, the n5 is an integer of 1 to 20,000

13. The lithium secondary battery of claim 10, wherein the gel polymer electrolyte is formed by injecting a gel polymer electrolyte composition including the oligomer into a battery case and then curing the composition.
